# EUROPEAN PATENT APPLICATION

(11) **EP 2 769 919 A1**
(43) Date of publication of application: **27.08.2014**
(21) Application number: 13840135.1
(22) Date of filing: 23.05.2013
(51) Int. Cl.: B65B 31/02, B23K 20/10, B29C 65/08, B23K 37/02

(54) **APPLIANCE FOR JOINING A SHEET-TYPE BODY TO THE MOUTH OF A BOX**

(30) Priority: 21.11.2012 ES 201231233
(71) Applicant: Ruiz Carmona, Manuel, 03190 Pilar de la Horadada (Alicante) (ES)
(72) Inventor: Ruiz Carmona, Manuel, 03190 Pilar de la Horadada (Alicante) (ES)
(74) Representative: Ungria López, Javier
(86) International application number: PCT/ES2013/070330
(87) International publication number: WO 2014/080053

(57) **Abstract**

The laminar body is previously placed on the opening of the box remaining stable on said opening during the attachment process, thereby closing the opening of the box to protect the products contained inside the box from outdoor elements. The attachment of the laminar body is carried out automatically by means of a pointer that moves along the perimeter of the opening of the box, in such a way that the attachment of the laminar body to the opening of the box is carried out simultaneously during said movement along the perimeter.

## Description

### Object of the invention

The invention, as expressed in the headline of this specification, relates to a device for attaching a laminar body to the opening of a box, where the laminar body is previously placed on the opening of the box remaining stable on said opening during the attachment process, thereby closing the opening of the box to preserve the products contained inside the box, such as fruits or vegetables for example, from outdoor elements.

The attachment of the laminar body is basically carried out automatically by means of a pointer that moves along the perimeter of the opening of the box, such that the attachment of the laminar body to the opening of the box is carried out simultaneously during said movement along the perimeter.

Therefore, the laminar body is intended to protect the products contained inside the box before the beginning of the corresponding logistics operations.

### BACKGROUND OF THE INVENTION

Plastic boxes, whose contents are protected from outdoor elements by means of a plastic film attached to the opening of the box with different welding devices, are currently known to present several problems:
- a manual operation is initially required for the cut and pre-placement of the film on said opening of the box.
- the welding devices of the film usually require a high temperature, implying that some fruits that may come from cooling chambers have humidity, as well as the box itself, and therefore the efficiency of the heat welding of the film on the surface of the border of the box may be reduced, what would imply that the general quality of the container upon its arrival to destination may not be appropriate because of the film is partially detached from the perimeter surface of the opening of the box.
- the heat welding of the film may in some cases reduce the rigidity of the container or box, as well as the rigidity of the fruit itself.

### DESCRIPTION OF THE INVENTION

With the purpose of reaching the objectives and avoiding the inconveniences mentioned in the previous sections, the invention proposes a device for attaching a laminar body to the opening of the box by means of an automatic process where the box, full of products, supports a laminar body arranged on the opening of the box that protects the product from outdoor elements, such that in this situation, and by keeping the box and the laminar body in static positions, the laminar body is automatically attached to the opening of the box by means of the device of the invention.

It comprises a pointer that moves along the perimeter border of the opening of the box to attach the laminar body previously placed and leaning against said perimeter border of the opening of the box.

The pointer is integrated in an aerial device coupled to parallel lateral profiles of an upper casing arranged above a conveyor belt where the box stands; the casing and conveyor belt being fixed to a frame supporting the set of the device.

The device of the invention also comprises adjustable guides arranged along both sides of the conveyor belt above the same, where the width of the box standing on the conveyor belt is adjusted by its sides against a part of the adjustable guides.

It also comprises movable stops arranged at both sides of the conveyor belt above the same, and which adopt a stable position selected between an inactive release position that lets the box pass during the dragging thereof through the conveyor belt, and an active position wherein the movable stops interrupt the forward movement of the box by halting the forward movement of the conveyor belt.

In this active position of the movable stops, a head wall of the box makes contact with the movable stops halting the forward movement of the box in a static position wherein the pointer moves along the perimeter border of the opening of the box to attach the laminar body to said opening.

The aerial device comprises a crossbar capable of longitudinal movement in a horizontal plane, a head capable of transverse movement in a horizontal plane, which is coupled to said crossbar and a carriage capable of vertical movement that supports the pointer and being coupled to the head.

The crossbar is coupled to a pair of lateral profiles of the upper casing at its end sections, while the crossbar moves longitudinally forward and backward with the intervention of a first pair of toothed belts coupled to pairs of first end pinions, transmitting the movement thereof by means of a first rotating motor element. One of the branches of the first belts is connected to the crossbar with the intervention of lateral pieces attached to the ends of said crossbar.

The head is guided in its movement along the length of the crossbar with the intermediation of a second toothed belt coupled to a pair of second end pinions frontally coupled to the crossbar itself.

In this case, one of the branches of the second toothed belt is joined to the head. The rotational movement of these second pinions is carried out by means of a second rotating motor element supported by the crossbar itself.

The coupling of the head with respect to the crossbar includes at least one roller that rolls along a slot established in the upper face of the crossbar along the same, this roller facilitating the mobility of the head.

The carriage supporting the pointer is coupled to the head, this carriage moving by means of a linear motor element such as a pneumatic cylinder.

The adjustable guides comprise two longitudinal rods against which the width of the box is adjusted and guided through its sides; the adjustable guides furthermore comprise transverse bars coupled to two guiding holes, where the adjustable guides move within the guiding holes in order to adjust to the width of the box.

The longitudinal rods of the adjustable guides comprise, in their initial ends, inclined sections that converge forward taking into account the forward direction of the box standing on the conveyor belt.

The movable stops are connected to the piston rods of pneumatic cylinders opposing each other installed on both sides of the conveyor belt above the same,.

The pointer integrates an ultrasonic cold welding device that attaches contact surfaces made of plastic material, where a first surface belongs to a laminar body determined by a plastic film and a second surface belongs to the box, which will be essentially manufactured of a plastic material.

The box presents a prismatic shape with a rectangular, square or hexagonal bottom, among others, such that two opposing lateral walls adjust against the adjustable guides and at least one front lateral wall connects against the movable stops.

Next, in order to facilitate a better comprehension of this specification and forming an integral part thereof, figures representing the object of the invention in an illustrative rather than limitative manner have been attached.

### BRIEF DESCRIPTION OF THE DRAWINGS

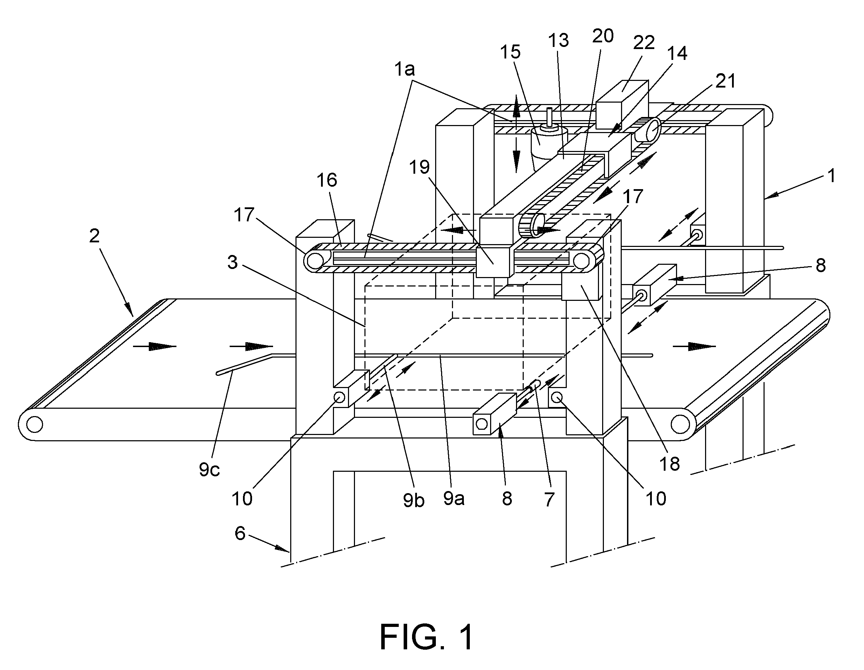

**Figure 1****.-** Shows a perspective view of the device for attaching a laminar body to the opening of a box, object of the invention.

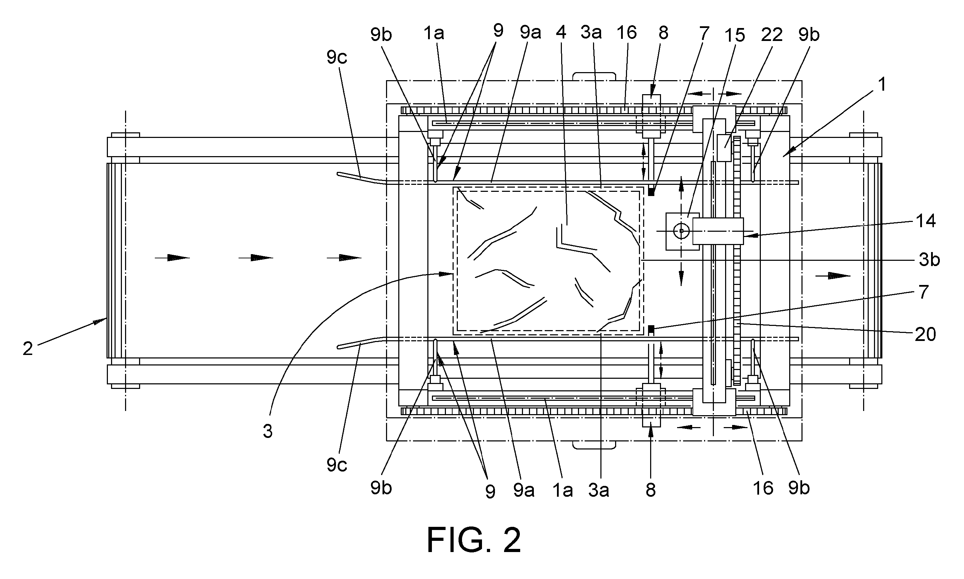

**Figure 2****.-** Shows a plant view of the device of the invention.

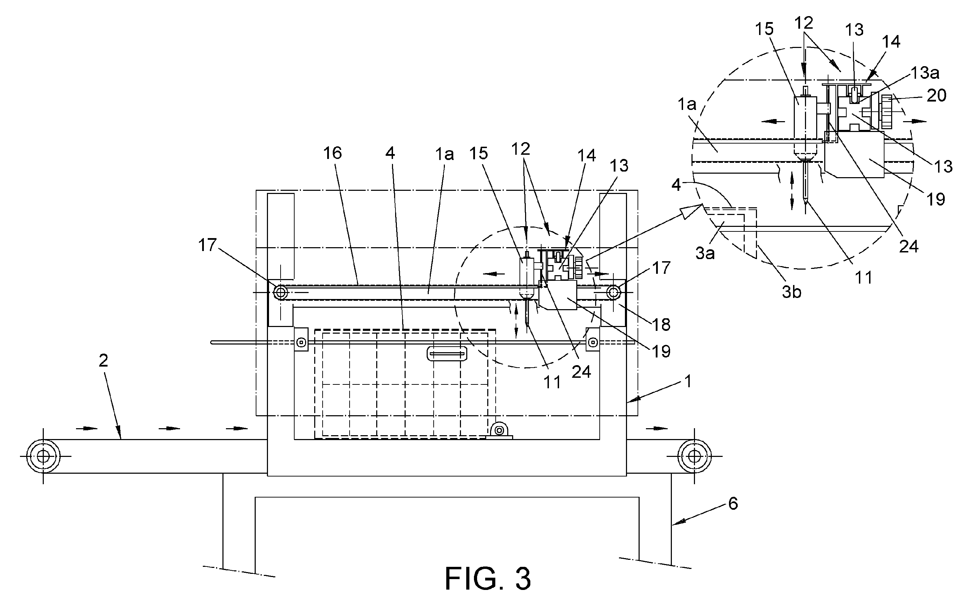

**Figure 3****.-** Shows a top view of the device of the invention.

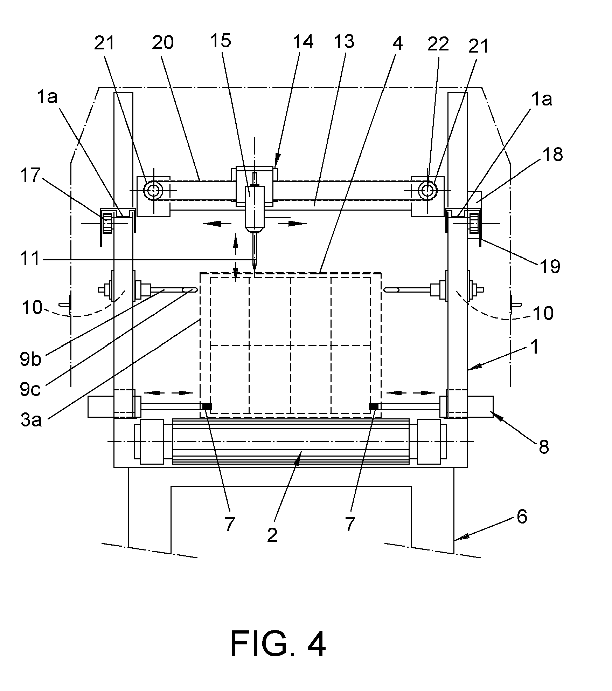

**Figure 4****.-** Shows another profile view of the device of the invention.
**Figure 5****.-** Shows a plant view of a box highlighting the course of the pointer during the attachment of the laminar body, beginning at one corner and ending at that same corner.

### DESCRIPTION OF AN EMBODIMENT OF THE INVENTION

Taking into account the numbering adopted in the figures, the device for attaching a laminar body to the opening of a box contemplates the following nomenclature used in the description:
- 1.-: Upper casing.
- 1a.-: Lateral profiles.
- 2.-: Conveyor belt.
- 3.-: Box.
- 3a.-: Sides.
- 3b.-: Head wall.
- 4.-: Laminar body.
- 5.-: Perimeter border.
- 5a.-: Initial corner.
- 5b.-: Successive corners.
- 6.-: Frame
- 7.-: Movable stops.
- 8.-: Pneumatic cylinders.
- 9.-: Adjustable guides.
- 9a.-: Longitudinal rods.
- 9b.-: Transverse bars.
- 9c.-: Inclined sections.
- 10.-: Guiding holes.
- 11.-: Pointer.
- 12.-: Aerial device.
- 13.-: Crossbar.
- 13a.-: Slot.
- 14.-: Head.
- 15.-: Carriage.
- 16.-: First toothed belts.
- 17.-: First end pinions.
- 18.-: First rotating motor element.
- 19.-: Lateral pieces.
- 20.-: Second toothed belt.
- 21.-: Second end pinions.
- 22.-: Second rotating motor element.
- 23.-: Roller.
- 24.-: Linear motor element.

It comprises an upper casing 1 located above a conveyor belt 2 wherein a box 3 full of a product is deposited, on which opening a laminar body 4 covering the product contained in the box 3 is placed, while said laminar body 4 is in contact with the perimeter border 5 of said opening at the same time.

Said upper casing 1 is fixed to a frame 6, which also holds the conveyor belt 2.

In this situation, the box 3 is dragged forward by the conveyor belt 2 until a specific position, where the forward movement of the conveyor belt 2, and therefore of the box 3, is halted, said position being delimited in a precise manner by movable stops 7 connected to the piston rods of pneumatic cylinders 8 opposing each other installed on both sides of the conveyor belt 2 above the same,.

The device of the invention also has adjustable guides 9 arranged along both sides of the conveyor belt 2 above the same, said adjustable guides 9 comprising two longitudinal rods 9a and transverse bars 9b coupled to guiding holes 10, where the longitudinal rods 9a adjust to the width of the respective box 3 standing on the conveyor belt, thus the box moves forward adjusted and guided at its sides 3a against the two longitudinal rods 9a, and when a head wall 3b of the box 3 makes contact with the movable stops 7 the conveyor belt 2 is halted and the box 3 is located in a specific predetermined static position.

In this specific static position of the box 3, a pointer 11 moves along the perimeter border 5 of the opening of the box 3 to attach the laminar body 4 to this perimeter border 5 of the opening of the box 3.

The longitudinal rods 9a of the adjustable guides 9 comprise in their initial ends inclined sections 9c that converge forward taking into account the forward direction of the box 3 standing on the conveyor belt 2.

In the embodiment shown in the figures, the attachment is made by means of ultrasonic cold welding. To achieve the foregoing, the laminar body 4 is a film made of plastic material and the box 3 is also manufactured of a plastic material.

The pointer 11 is integrated in an aerial device 12 coupled to the upper casing 1, said pointer 11 being capable of moving in the three directions of space.

This aerial device 12 comprises a crossbar 13 with longitudinal movement in a horizontal plane, a head 14 with transverse movement in a horizontal plane, coupled to said crossbar 13, and a carriage 15 with vertical movement supporting the pointer 11 and coupled to the head 14.

The crossbar 13 is coupled to a pair of lateral profiles 1a of the upper casing 1 at its end sections, while the crossbar 13 moves longitudinally forward and backward with the intervention of a first pair of toothed belts 16 coupled to pairs of first end pinions 17, transmitting the movement thereof by means of a first rotating motor element 18.

One of the branches of the first toothed belts 16 is connected to the crossbar 13 with the intervention of lateral pieces 19 joined to the ends of said crossbar 13.

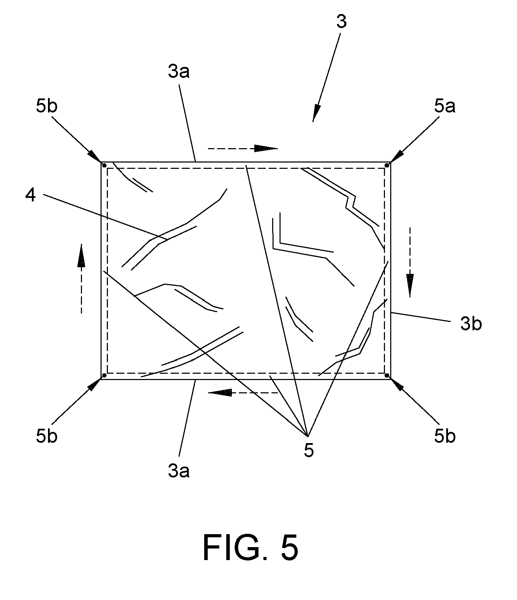

The head 14, as shown more clearly in figure 5, is guided in its displacement along the crossbar 13 with the intermediation of a second toothed belt 20, coupled to a pair of second end pinions 21 frontally coupled to the crossbar itself 13. In this case as well, one of the branches of the second toothed belt 20 is attached to the head 14. The rotational movement of these second pinions 21 is carried out by means of a second rotating motor element 22 supported by the crossbar 13 itself.

The coupling of the head 14 with respect to the crossbar 13 includes at least a roller 23 that rolls along a slot 13a established on an upper face of the crossbar 13 along the same, this roller 13a facilitating the mobility of the head 14.

The carriage 15 supporting the pointer 11 is coupled to the head 14, this carriage 15 moving in the vertical direction by means of a linear motor element 24 such as a pneumatic cylinder.

With this arrangement as described above, once the box 3 full of product and with the laminar body 4 (plastic film) placed on the opening of the box 3, deposited the same is dragged by the conveyor belt 2 until its head wall 3b makes contact against the movable stops 7, at that moment the forward movement of the conveyor belt 2, and therefore the forward movement of the box 3, is halted.

In this static position of the box 3, the pointer 11 moves along the contour of the perimeter border 5 of the opening of the box 3 to materialize the welded attachment of the plastic film on said perimeter border 5 of the opening, beginning at an initial corner 5a of the opening, then moving along the other corners 5b successively, and finishing at the initial corner 5a, as shown more clearly in figure 5.

Once the attachment of the laminar body 4 to the opening of the box 3 is completed, the pneumatic cylinders 8 are activated by pulling back the movable stops 7 in order to restart the forward movement of the conveyor belt 2 that will drag the box to the end of said conveyor belt 2.

It should be noted that at the beginning of the welded attachment, the pointer 11 goes downward from an initial elevated position, dragged by the carriage 15 with a downward vertical movement, whilst when the welded attachment is finished the pointer 11 returns to its initial position by moving upwards until it reaches its initial position.

On the other hand, even though a prismatic box with a rectangular bottom is shown in the embodiment of the invention, the device of the invention is also applicable to prismatic boxes with square or hexagonal bottoms, among others, such that in all cases two opposing lateral walls adjust against the longitudinal rods 9b of the adjustable guides 9, while at least one head lateral wall makes contact with the movable stops 7.

Therefore, in the particular case of box 3 shown in the figures, the opposing lateral walls correspond to the sides 3a, and the head lateral wall correspond to the head wall 3b.

## Claims

1. Device for attaching a laminar body to the opening of a box, comprising a pointer that moves along the perimeter border of the opening of a box to attach a laminar body previously placed and leaning against said perimeter border of the opening of the box; **characterized in that**:
- the pointer is integrated in an aerial device (12) coupled to parallel lateral profiles (1a) of an upper casing (1) arranged above a conveyor belt (2) where the box (3) stands; the casing (1) and the conveyor belt (3) being fixed to a frame (6) supporting the set of the device;
- it comprises adjustable guides (9) arranged along both laterals of the conveyor belt (2) above the same, where the width of the box (3) leaning against the conveyor belt (2) is adjusted by two opposing lateral walls against a part of the adjustable guides (9);
- it comprises movable stops (7) arranged at both sides of the conveyor belt (2) above the same and which adopt a stable position selected between an inactive release position that lets the box (3) pass during the dragging thereof through the conveyor belt (2), and an active position wherein the movable stops (7) interrupt the forward movement of the box (3) by halting the forward movement of the conveyor belt (2);
where in this active position of the movable stops (7), at least a head wall of the box (3) makes contact with the movable stops (7) halting the forward movement of the box (3) in a static position wherein the pointer (11) moves along the perimeter border (5) of the opening of the box (3) to attach the laminar body (4) to said opening.

2. Device for attaching a laminar body to the opening of a box, according to claim 1, **characterized in that** the aerial device comprises:
- a crossbar with longitudinal movement in a horizontal plane;
- a head with transverse movement in a horizontal plane, said head (14) being coupled to said crossbar (13);
- a carriage (15) with vertical movement supporting the pointer (11) and coupled to the head (14).

3. Device for attaching a laminar body to the opening of a box, according to claim 2, **characterized in that** the crossbar (13) is coupled to a pair of lateral profiles (1a) of the upper casing (1) at its end sections, while the crossbar (13) moves longitudinally forward and backward with the intervention of a first pair of toothed belts (16) coupled to pairs of first end pinions (17); where the movement of these first end pinions (17) is carried out by means of a first rotating motor element (18).

4. Device for attaching a laminar body to the opening of a box, according to any one of the claims 2 or 3, **characterized in that** the head (14) is guided in its movement along the crossbar (14) with the intermediation of a second toothed belt (20) coupled to a pair of second end pinions (21) frontally coupled to the crossbar (13) itself; where one of the branches of the second belt (20) is attached to the head (14), transmitting the movement of the pinions (21) by means of a second rotating motor element (22) supported in the crossbar (13) itself.

5. Device for attaching a laminar body to the opening of a box, according to claim 4, **characterized in that** the coupling of the head (14) with respect to the crossbar (13) includes at least one roller (23) that rolls along the length of a slot (13a) established in an upper face of the crossbar (13) along the same.

6. Device for attaching a laminar body to the opening of a box, according to any one of the claims 2 to 5, **characterized in that** the carriage (15) supporting the pointer (11) is coupled to the head (14), this carriage (15) moving by means of a linear motor element (24).

7. Device for attaching a laminar body to the opening of a box, according to any one of the previous claims, **characterized in that** adjustable guides (9) comprise:
- two longitudinal rods (9a) against which the width of the box (3) is adjusted and guided by its opposing lateral walls;
- transverse bars (9b) coupled to two guiding holes (10) where the adjustable guides (9) move within the guiding holes (10) to adjust to the width of the box (3).

8. Device for attaching a laminar body to the opening of a box, according to claim 7, **characterized in that** the longitudinal rods (9a) of the adjustable guides (9) comprise inclined sections (9c) that converge forward in their initial ends, taking into account the forward direction of the box (3) standing on the conveyor belt (2).

9. Device for attaching a laminar body to the opening of a box, according to any one of the previous claims, **characterized in that** the movable stops (7) are connected to the piston rods of pneumatic cylinders (8) opposing each other installed on both sides of the conveyor belt (2) above the same.

10. Device for attaching a laminar body to the opening of a box, according to any one of the previous claims, **characterized in that** the pointer (11) integrates an ultrasonic cold welding device that attaches contact surfaces made of plastic material, where a first surface belongs to a laminar body (4) determined by a plastic film and a second surface belongs to the box (3) presenting a plastic material structure.
